(19) Europäisches Patentamt
European Patent Office
Office européen des brevets

(11) **EP 4 601 176 A1**

(12) **EUROPEAN PATENT APPLICATION**

(43) Date of publication:
**13.08.2025 Bulletin 2025/33**

(21) Application number: **24221791.7**

(22) Date of filing: **19.12.2024**

(51) International Patent Classification (IPC):
*H02M 1/32* $^{(2007.01)}$     *H02M 1/36* $^{(2007.01)}$
*H02M 7/487* $^{(2007.01)}$

(52) Cooperative Patent Classification (CPC):
**H02M 7/487; H02M 1/32; H02M 1/36**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2024 CN 202410178260**

(71) Applicant: **Sungrow Power Supply Co., Ltd.
Hefei, Anhui 230088 (CN)**

(72) Inventors:
• **Li, Bijie
  Hefei 230088 (CN)**
• **Yuan, Yue
  Hefei 230088 (CN)**
• **Yang, Yongchang
  Hefei 230088 (CN)**
• **Yu, Yanfei
  Hefei 230088 (CN)**

(74) Representative: **Epping - Hermann - Fischer
Patentanwaltsgesellschaft mbH
Schloßschmidstraße 5
80639 München (DE)**

(54) **INVERTER, METHOD FOR TURNING OFF INVERTER, AND PHOTOVOLTAIC SYSTEM**

(57) An inverter, a method for turning off an inverter, and a photovoltaic system are provided. Pulse blocking is performed on an inverter circuit in response to a short circuit of a negative electrode of the DC source to ground. The switching module is turned off if a first current of the switching module at a current time instant is less than or equal to a first preset current, and a current change trend is a descending trend. Alternatively, the switching module is turned off within a preset duration starting from a time instant when an acquired current of the switching module is less than or equal to a preset value if the current change trend is a descending trend.

Perform pulse blocking on the inverter circuit in response to a short circuit of a negative electrode of the DC source to ground, where the pulse blocking includes disabling a drive pulse for each switching transistor in the inverter circuit — S401

Determine whether a first current of the switching module at a current time instant is less than or equal to a first preset current after the inverter circuit is subjected to the pulse blocking, where the first preset current is greater than or equal to a safe current of the switching module; determine a current change trend of the switching module at the current time instant if the first current of the switching module is less than or equal to the first preset current; and turn off the switching module if the current is in a descending trend; or, turn off the switching module within a preset duration starting from a time instant when the acquired current of the switching module is less than or equal to a preset value, upon determining that the current of the switching module is in the descending trend after the inverter circuit is subjected to the pulse blocking — S402

**FIG. 4**

**Description**

**FIELD**

The present disclosure relates to the technical field of inverters, and in particular to an inverter, a method for turning off an inverter, and a photovoltaic system.

**BACKGROUND**

A short circuit of an inverter may cause damage to the inverter. For example, in a photovoltaic inverter, if a negative electrode of a photovoltaic string connected to an input end of the photovoltaic inverter is short-circuited to ground, causing damage to the inverter, and thus a short-circuited loop to ground at the negative electrode of the photovoltaic string is to be cut off in time.

Currently, short circuit current still exists after the inverter is subjected to pulse blocking, and thus is to be cut off by turning off the relay. However, turning off the relay with a large current seriously reduces a service life of the relay.

**SUMMARY**

In view of this, an inverter, a method for turning off an inverter, and a photovoltaic system are provided in the present disclosure, to turn off the relay safely when cathodes of wires at a direct-current side of the inverter are grounded.

In a first aspect, an inverter is provided in the present disclosure, including: an inverter circuit, at least one switching module and a controller. An input end of the inverter circuit is configured to connect a direct-current, DC, source, an output end of each phase of the inverter circuit is connected to a corresponding switching module of the at least one switching module, and an output end of the at least one switching module is configured to connect a power grid.

The controller is configured to perform pulse blocking on the inverter circuit in response to a short circuit of a negative electrode of the DC source to ground, where the pulse blocking includes disabling a drive pulse for each switching transistor in the inverter circuit; determine whether a first current of a switching module of the at least one switching module at a current time instant is less than or equal to a first preset current after the inverter circuit is subjected to the pulse blocking, where the first preset current is greater than or equal to a safe current of the switching module; determine a current change trend of the switching module at the current time instant in response to the first current of the switching module being less than or equal to the first preset current; and turn off the switching module in response to the current change trend being a descending trend; or turn off the switching module within a preset duration starting from a time instant when an acquired current of the switching module is less than or equal to a preset value, upon determining the current change trend of the switching module as the descending trend after the inverter circuit is subjected to the pulse blocking.

In an embodiment, for determining the current change trend of the switching module as the descending trend, the controller is configured to: continuously acquire multiple currents of the switching module; and determine the current change trend of the switching module as the descending trend in response to the multiple currents of the switching module in the descending trend.

In an embodiment, the preset value is zero, and the preset duration is a first duration for which a current of the switching module is zero;

the preset value is a current corresponding to a first time instant, the first time instant is a periodic time instant determined by subtracting a first delay duration from a time instant when a current in a periodic current curve corresponding to the switching module decreases to zero, and the first delay duration includes a duration from a time instant when a turn-off signal is sent to the switching module to a time instant when the switching module is actually turned off, where the preset duration is a first duration for which a current of the switching module is zero; or

the preset value is a current corresponding to a second time instant, the second time instant is a periodic time instant determined by subtracting a second delay duration from a time instant when a current in a periodic current curve corresponding to the switching module decreases to zero, and the second delay duration includes a duration from a time instant when a turn-off signal is sent to the switching module to a time instant when the switching module is actually turned off, and a power-resistant duration from a time instant corresponding to a maximum impulse current withstood by the switching module to a time instant when the current in a descending portion of the periodic current curve decreases to zero; and the preset duration is a sum of a first duration for which a current of the switching module is zero and two times of the power-resistant duration.

In an embodiment, the first duration is calculated by the following equation:

$$T = \frac{\pi + \frac{\pi}{6}}{2\pi} * \frac{1}{f} + \triangle T$$

where, $\triangle T$ represents a first time length from a time instant when the current of the switching module decreases to zero to a nearest time instant when a voltage of the switching module is zero on condition that the current descending trend of the switching module is the descending trend,

$$\triangle T = \frac{2\pi - \arcsin\left(\frac{V}{\sqrt{2}U}\right)}{2\pi} * \frac{1}{f}, \quad \frac{3\pi}{2} < \arcsin\left(\frac{V}{\sqrt{2}U}\right) < 2\pi$$

, U represents a rated voltage of phase power corresponding to the switching module, V represents a voltage of the phase power corresponding to the switching module, and f represents a frequency of the phase power corresponding to the switching module.

In an embodiment, for the determining the current change trend of the switching module at the current time instant, the controller is configured to: determine the current change trend of the switching module at the current time instant based on a current of the switching module acquired before the current time instant; and/or acquire a second current of the switching module if a specified duration expires; and determine the current change trend of the switching module based on a relationship between the first current and the second current.

In an embodiment, after determining whether a first current of a switching module of the at least one switching module at a current time instant is less than or equal to a first preset current, the inverter is further configured to: monitor the current of the switching module in response to the first current of the switching module being greater than the first preset current; and turn off the switching module upon monitoring that the current of the switching module decreases to be less than or equal to the first preset current.

In an embodiment, the safe current is greater than zero, and after determining whether a first current of a switching module of the at least one switching module at a current time instant is less than or equal to a first preset current, the inverter is further configured to: determine whether the first current is less than or equal to a second preset current, where the second preset current is less than the safe current; and turn off the switching module in response to the first current being less than or equal to the second preset current.

In an embodiment, for each of the at least one switching module, the switching module includes at least two relay switches, and a control terminal of each of the at least two relay switches is connected to the controller. For the turning off the switching module, the controller is configured to: turn off one of the at least two relay switches in the switching module.

In a second aspect, a method for turning off an inverter is provided in the present disclosure, where the inverter includes: an inverter circuit, at least one switching module and a controller; an input end of the inverter circuit is configured to connect a direct-current, DC, source, an output end of each phase of the inverter circuit is connected to a corresponding switching module of the at least one switching module, and an output end of the at least one switching module is configured to connect a power grid.

The method includes: performing pulse blocking on the inverter circuit in response to a short circuit of a negative electrode of the DC source to ground, where the pulse blocking includes disabling a drive pulse for each switching transistor in the inverter circuit; determining whether a first current of a switching module of the at least one switching module at a current time instant is less than or equal to a first preset current after the inverter circuit is subjected to the pulse blocking, where the first preset current is greater than or equal to a safe current of the switching module; determining a current change trend of the switching module at the current time instant in response to the first current of the switching module being less than or equal to the first preset current; and turning off the switching module in response to the current change trend being a descending trend; or turning off the switching module within a preset duration starting from a time instant when an acquired current of the switching module is less than or equal to a preset value, upon determining the current change trend of the switching module as the descending trend after the inverter circuit is subjected to the pulse blocking.

In a third aspect, a photovoltaic system is provided in the present disclosure. The photovoltaic system includes a photovoltaic string and an inverter, where the photovoltaic string is connected to an input end of the inverter, and is configured to supply direct-current, DC, power to the inverter; an output end of the inverter is configured to connect a power grid, convert DC power into alternating-current, AC, power and transmit the AC power to the power grid, and the inverter is at least one of the inverter as described above or the inverter to which the method as described above is applied.

An inverter, a method for turning off an inverter, and a photovoltaic system are provided in the present disclosure. In the present disclosure, pulse blocking is performed on the inverter circuit in response to a short circuit of a negative electrode of the DC source to ground, it is determined whether a first current of a switching module of the at least one switching module at a current time instant is less than or equal to a first preset current after the inverter circuit is subjected to the pulse blocking, where the first preset current is greater than or equal to a safe current of the switching module; a current change trend of the switching module at the current time instant is determined in response to the first current of the switching module being less than or equal to the first preset current; and the switching module is turned off in response to the current change trend being a descending trend; or, the switching module is turned off within a preset duration starting from a time instant when an acquired current of the switching module is less than or equal to a preset value, upon determining the current change trend of the switching module as the descending trend after the inverter circuit is subjected to the pulse blocking. It is monitored and analyzed whether the switching module can be safely turned off in combination with the current change trend of the switching module and by comparing the current of the switching module with the first preset current or with the preset value, and the relay is turned off within a long time range based on the current analysis, better adapting the time consumed in the turn-off process. In addition, the preset duration expands a time range of turn-off control by the controller, reducing the situation that the controller is not turned off until a next cycle, that is, reducing the situation that the switches withstand a large impulse current again during a process of waiting for the next cycle.

## BRIEF DESCRIPTION OF THE DRAWINGS

In order to illustrate technical solutions in embodiments of the present disclosure or the conventional technology more clearly, drawings to be used in the embodiments or the conventional technology are introduced simply hereinafter. It is apparent that the drawings described below show only some embodiments of the present disclosure. For those skilled in the art, other drawings may be obtained based on the provided drawings without any creative effort.

FIG. 1 is a schematic diagram of an inverter circuit according to an embodiment of the present disclosure;

FIG. 2 is a schematic structural diagram of an inverter according to an embodiment of the present disclosure;

FIG. 3 is a schematic diagram illustrating a periodic current curve and a periodic voltage curve of a switching module after a negative electrode of a DC source is short-circuited to ground according to an embodiment of the present disclosure; and

FIG. 4 is a schematic flowchart of a method for turning off an inverter according to an embodiment of the present disclosure.

## DETAILED DESCRIPTION

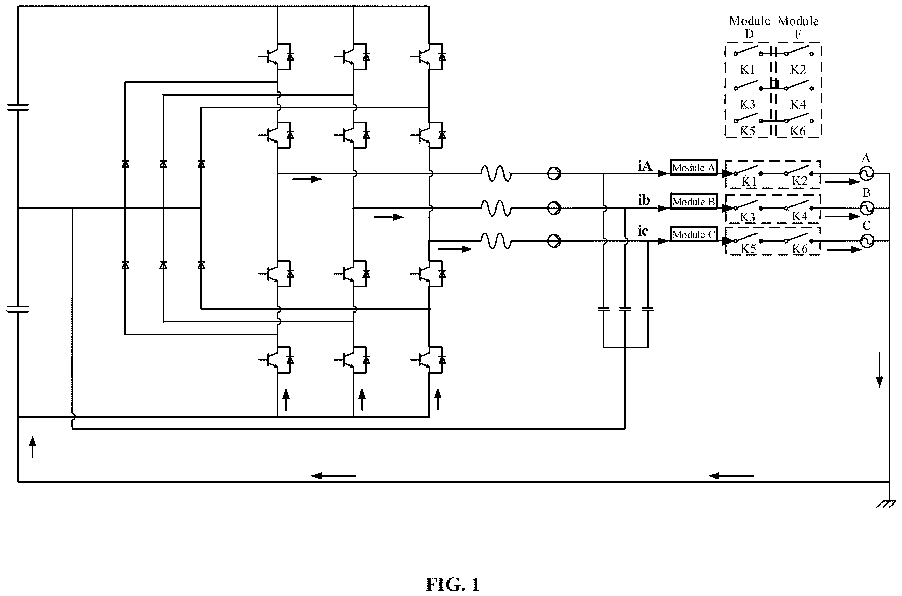

A short circuit of an inverter may cause damage to the inverter. For example, in a photovoltaic inverter, if a negative electrode of a photovoltaic string connected to an input end of the photovoltaic inverter is short-circuited to ground (FIG. 1 is a schematic diagram of an inverter circuit, where a short-circuited loop to ground at the negative electrode of the photovoltaic string is indicated by a direction of arrows), causing damage to the inverter, and thus the short-circuited loop to ground at the negative electrode of the photovoltaic string is to be cut off in time. Currently, short circuit current still exists after the inverter is subjected to pulse blocking, and thus outputs of multiple phases of the inverter are to be cut off. As shown in FIG. 1, switches K1, K3 and K5 are turned off simultaneously by a relay group D, and switches K2, K4 and K6 are turned off simultaneously by a relay group F to control the output of multiple phases of the inverter, where the relay group D and the relay group F each include multiple relays that operate independently or include multiple relays that are integrated into a whole. However, if the outputs of multiple phases of the inverter are cut off simultaneously, one relay may be turned off at a large current due to three-phase power being out of phase, resulting in damage to the relay.

In view of the above problems, an inverter is provided in the present disclosure, including an inverter circuit, at least one switching module and a controller, where an input end of the inverter circuit is configured to connect a DC source, an output end of each phase of the inverter circuit is connected to a corresponding switching module of the at least one switching module, and an output end of the at least one switching module is configured to connect a power grid. In this way, the controller turns off the switching module connected to each phase of the inverter circuit sequentially, so as to cut off the short-circuited loop. The turning off the switching module by the controller may include performing pulse blocking on the inverter circuit in response to a short circuit of a negative electrode of the DC source to ground, where the pulse blocking includes disabling a drive pulse for each switching transistor in the inverter circuit.

After the inverter circuit is subjected to pulse blocking, it is determined whether a first current of a switching module of the at least one switching module at a current time instant is less than or equal to a first preset current, and the first preset current is greater than or equal to a safe current of the switching module. In a case that the first current of the switching module is less than or equal to the first preset current, a current change trend of the switching module at the current time instant is determined; and the switching module is turned off in response to the current change trend being in a descending trend. That is, the switching module is turned off by comparing the monitored current of the switching module with the first preset current in conjunction with the current change trend of the switching module. It should be noted that the first preset current being greater than or equal to the safe current of the switching module is due to that there is a delay duration from a time instant when a turn-off signal is sent to the switching module to a time instant when the switching module is actually turned off, and thus the switching module is turned off before the current decreases to the safe current. Alternatively, the switching module is turned off within a preset duration starting from a time instant when the current of the switching module is less than or equal to a preset value, upon determining the current change trend of the switching module as the descending trend after the inverter circuit is subjected to pulse blocking. That is, the switching module is turned off within the preset duration starting from a time instant when it is monitored that the switching module can be turned off. In this way, the switching module is turned off within a large current range, so that the relay is turned off within a long time range, better adapting the time consumed in the turn-off process. In addition, the preset duration expands a time range of turn-off control by the controller, reducing a situation that the controller is not turned off until a next cycle, that is, reducing a situation that the switches withstand a large impulse current again during a process of waiting for the next cycle.

In addition, each switching module may include multiple relay switches connected in series, and a control terminal of each of the relay switches is connected to the controller. Multiple redundant switches are arranged on the switching module, so that the switches can alternately operate, prolonging the service life of each switch.

In order to understand the features and technical content of the embodiments of the present disclosure more thoroughly, implementations of the embodiments of the present disclosure are described in detail below with reference to the drawings. The drawings are only for the purpose of reference and illustration, rather than to limit the embodiments of the present disclosure. In the following description of the technology, to facilitate explanation, numerous details are set forth in order to provide a thorough understanding of the disclosed embodiments. However, one or more embodiments may still be implemented without these details. In other instances, well-known structures and devices may simplify presentation for simplicity of the drawings.

In the specification, the claims and the drawings of the embodiments of the present disclosure, terms such as "first" and "second" are merely for distinguishing similar objects rather than describing a specific order or sequence. The data used in such a way is interchangeable in proper circumstances, to facilitate describing the embodiments of the present disclosure. Moreover, the terms "comprise", "include", and any variations thereof are intended to cover non-exclusive inclusion.

Unless otherwise stated, the term "plurality "or "multiple" means two or more.

In the embodiments of the present disclosure, the character "/" indicates an "or" relationship between the objects before and after. For example, A/B represents: A or B.

The term "and/or" is an association relationship describing an object, indicating that there may be three relationships. For example, A and/or B represents three relationships: A, B, or A and B.

In order to make the purpose, technical solutions and advantages of the embodiments of the present disclosure more clear, the technical solutions in the embodiments of the present disclosure are described clearly and completely hereinafter with reference to the drawings in the embodiments of the present disclosure. Apparently, the described embodiments are only some, rather than all of the embodiments of the present disclosure. Based on the embodiments of the present disclosure, all other embodiments obtained by those skilled in the art without any creative work fall into the protection scope of the present disclosure.

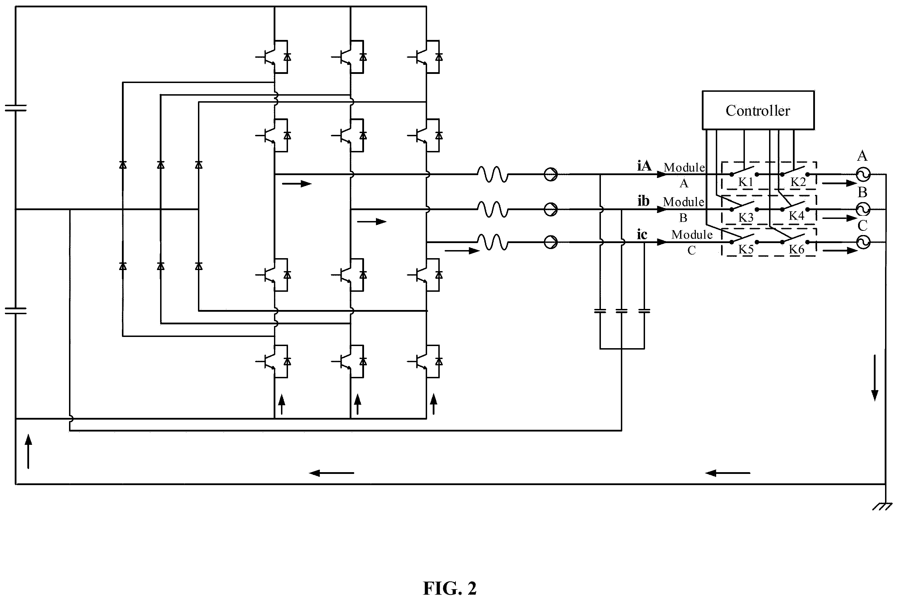

Reference is made to FIG. 2, which is a schematic structural diagram of an inverter according to an embodiment. The inverter includes an inverter circuit, at least one switching module and a controller. An input end of the inverter circuit is configured to connect a DC source, an output end of each phase of the inverter circuit is connected to a corresponding switching module of the at least one switching module, and an output end of the at least one switching module is configured to connect a power grid.

The DC source may be a photovoltaic string, a DC bus connected to multiple photovoltaic strings, or other energy storage module capable of storing DC power.

The switching module may include at least one relay switch. The controller turns off one relay switch or multiple relay switches in the switching module, thus turning off the switching module.

The inverter circuit may be a single-phase inverter circuit, or may be a multi-phase inverter circuit. For example, referring to the inverter circuit shown in FIG. 2, the inverter circuit is a three-phase inverter circuit. Corresponding to the three-phase inverter circuit in FIG. 2, a switching module A, a switching module B, and a switching module C are arranged. Each switching module includes at least two switches connected in series. For example, the switching module A includes K1 and K2 connected in series. Each phase of the inverter circuit is connected to the power grid through the switching module. For example, the switching module A includes K1 and K2 connected in series, and phase power is transmitted to the power grid via an output port A of the switching module A. Similarly, corresponding phase power is transmitted to the power grid via an output port B of the switching module B or an output port C of the switching module C.

The controller is configured to perform pulse blocking on the inverter circuit in response to a short circuit of a negative electrode of the DC source to the ground, where the pulse blocking includes disabling a drive pulse for each switching transistor in the inverter circuit.

In an embodiment, after the inverter circuit is subjected to the pulse blocking, it is determined whether a first current of the switching module at a current time instant is less than or equal to a first preset current, where the first preset current is greater than or equal to a safe current of the switching module; a current change trend of the switching module at the current time instant is determined in response to the first current of the switching module being less than or equal to the first preset current; and the switching module is turned off in response to the current change trend being a descending trend.

The safe current described above is determined based on a maximum impulse current that can be withstood by the switching module. For example, the safe current is zero if the switching module fails to withstand the impulse current.

It should be noted that the first preset current being greater than or equal to the safe current of the switching module is due to that there is a delay duration from a time instant when a turn-off signal is sent to the switching module to a time instant when the switching module is actually turned off, and thus the switching module is turned off before the current decreases to the safe current. The time instant when the switching module is actually turned off is later than the time instant corresponding to the safe current. A current corresponding to the time instant when the switching module is actually turned off is less than or equal to the safe current.

The current of the switching module may be a current at an input end of the switching module, or a current at an output end of the switching module.

In another embodiment, after the inverter circuit is subjected to the pulse blocking, if it is determined that the current of the switching module is in the descending trend, the switching module is turned off within a preset duration starting from a time instant when the acquired current of the switching module is less than or equal to the preset value.

Based on the inverter, after the inverter is subjected to the pulse blocking, that is, the drive pulse for the inverter circuit is disabled, the current of the switching module is detected, in order to ensure that the switching module is turned off at a low current, thereby avoiding damage to the relay switches in the switching module due to a large current. Therefore, in the above embodiment, the switching module is turned off in response to the monitored current of the switching module being less than or equal to the first preset current and the current descending trend of the switching module being in the descending trend. The switching module is turned off upon monitoring that the current of the switching module being less than or equal to the first preset current and the current change trend of the switching module being the descending trend, so that the relay is turned off within a long time range, better adapting to the time consumed in the turn-off process. In the above embodiment, if the current is in the descending trend, the switching module is turned off within the preset duration starting from the time instant when the acquired current of the switching module is less than or equal to the preset value. The preset duration expands a time range of turn-off control by the controller, reducing the situation that the controller is not turned off until a next cycle, that is, reducing the situation that the switches withstand a large impulse current again during a process of waiting for the next cycle.

In the embodiment of the present disclosure, detailed implementations in the embodiment described in FIG. 2 are described below. It should be noted that the implementations provided in the following descriptions are merely illustrative, and do not represent all implementations of the embodiments of the present disclosure.

In an embodiment, after the inverter circuit is subjected to the pulse blocking, it is determined whether a first current of the switching module at a current time instant is less than or equal to the first preset current, where the first preset current is greater than or equal to the safe current of the switching module; a current change trend of the switching module at the current time instant is determined if the first current of the switching module is less than or equal to the first preset current; and the switching module is turned off if the current change trend is the descending trend.

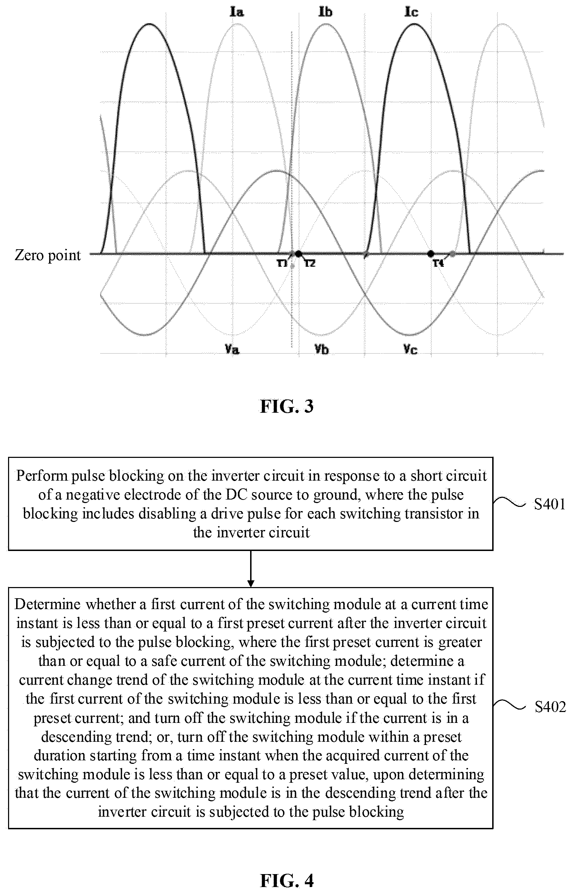

The first preset current is a current corresponding to a time instant obtained by subtracting a first delay duration from a time instant corresponding to the safe current based on a periodic current curve. The first delay duration includes a duration from the time instant when the turn-off signal is sent to the switching module to a time instant when the switching module is actually turned off. Exemplarily, reference is made to FIG. 3, which is a schematic diagram illustrating a periodic current curve and a periodic voltage curve of a switching module after a negative electrode of a DC source is short-circuited to ground according to an embodiment of the present disclosure. The periodic current curve of the A-phase current Ia corresponding to the switching module A of the inverter circuit in FIG. 3 is taken as an example. In the descending portion of the periodic current curve, if the safe current of 0 corresponding to a time instant T1, the current corresponding to the time instant obtained by subtracting the first delay duration of the switching module A from the time instant T1 is the first preset current of the switching module A.

The safe current is determined based on the ability of withstanding the impulse current of the relay switch in the switching module. The safe current is zero if the switching module has no ability to withstand the impulse current, and the safe current is a maximum impulse current withstood by the switching module if the switching module has an ability to withstand the impulse current.

The first delay duration is mainly caused by a signal delay duration of a micro control unit (MCU) of the controller, a turn-off duration of the relay, a turn-off duration of the driving circuit, or the like. The signal delay duration of the MCU is determined based on human experience, the turn-off duration of the relay is determined based on the relay parameter, and the turn-off duration of the driving circuit is determined based on a driving voltage.

The switching module is turned off by the following multiple manners.

In an embodiment, upon determining the first current of the switching module at a current time instant is less than or equal to the first preset current after the inverter circuit is subjected to the pulse blocking, a current change trend of the switching module at the current time instant is determined, and the switching module is turned off if the current change trend is the descending trend.

The process of determining a current change trend of the switching module at the current time instant includes: determining current change trend of the switching module at the current time instant is determined based on a current of the switching module acquired before the current time instant; and/or acquiring a second current of the switching module if a specified duration expires; and determining the current change trend of the switching module based on a relationship between the first current and the second current.

For example, the inverter may be provided with an acquisition circuit, or the like, and may acquire and record the current of the switching module with a preset time interval (where the time interval may be constant, or may change). For example, the time interval is determined based on a frequency or a cycle of phase power of the inverter circuit, for example, the frequency of the phase power is 50Hz, the cycle of phase power is 0.02S, and the time interval may be one twentieth of the cycle, that is, 0.001S, so that the current change trend can be determined by multiple times of acquisitions. If it is determined that the first current of the switching module at the current time instant is less than or equal to the first preset current, one current or more currents of the switching module continuously acquired before the current time instant is determined, and the current change trend of the switching module at the current time instant is determined based on the historical currents and the current at the current time instant. The current descending trend is the descending trend if the current gradually decreases with the time, and the current descending trend is a rising trend if the current gradually increases with the time.

For example, the specified duration is determined based on a frequency or a cycle of phase power of the inverter circuit. For example, the frequency of the phase power is 50Hz, the cycle of phase power is 0.02S, and the specified duration may be one twentieth of the cycle, that is, 0.001S. Alternatively, the specified duration is determined based on human experience.

The process of determining the current change trend of the switching module based on the relationship between the first current and the second current includes determining the current change trend of the switching module as the descending trend in response to the first current being greater than the second current.

Based on the above embodiment, in an embodiment, the impulse current withstood by the switching module is set to 0.5 amps (A), the safe current is 0.5A, the switching module is already off when the current is less than or equal to 0.5A, and the first preset current of the switching module is determined as 0.6A.

If the first current of the switching module at the current time instant is less than 0.6A, and a current of the switching module last time before the current time instant is acquired as, for example, 0.7A, the current change trend of the switching module is determined as the descending trend based on the first current and the current last time before the current time instant, and the switching module is turned off.

Alternatively, if the first current of the switching module at the current time instant is less than 0.6A, the second current is acquired immediately after 0.001S, for example, the second current is acquired as 0.5 A, the current change trend of the switching module is determined as the descending trend, and the switching module is turned off.

In another embodiment, during determining whether the first current of the switching module at the current time instant is less than or equal to the first preset current, the current of the switching module is continuously monitored if the first current of the switching module is greater than the first preset current until it is monitored that the current of the switching module decreases to be less than or equal to the first preset current, and the switching module is turned off.

Exemplarily, when it is monitored that the first current of the switching module is 1A, which is greater than the first preset current 0.6A, the current of the switching module is continuously monitored. For example, the current of the switching module is continuously monitored and acquired as 0.85A, 0.65A, and 0.45A until it is monitored that the current of the switching module decreases to a current less than or equal to the first preset current. That is, the switching module is turned off when it is monitored that the current decreases to 0.45A which is less than the first preset current 0.6A.

In another embodiment, if the relay switch in the switching module has an ability to withstand the impulse current, the safe current is, for example, 0.5A as described above. In this case, upon determining that the current of the switching module is less than or equal to the first preset current, the controller is further configured to determine whether the first current is less than or equal to a second preset current, where the second preset current is less than the safe current and greater than zero.

After the DC source is short-circuited to ground, referring to FIG. 3, the current of the switching module is positive, and the second preset current corresponds to a time instant obtained by adding the first delay duration and the time instant corresponding to the safe current in the descending portion of the periodic current curve in FIG. 3; or, the second preset current corresponds to a time instant obtained by subtracting the first delay duration from the time instant corresponding to the safe current in the rising portion of the periodic current curve. The second preset current is greater than zero.

The switching module is turned off in response to the first current being less than or equal to the second preset current.

If it is monitored that the first current is less than the second preset current, no matter whether in the rising portion or the descending portion of the periodic current curve, after sending the turn-off signal to the switching module, the controller can turn off the switching module within the range of the safe current even immediately after the first delay duration. Therefore, in a case that the relay switch in the switching module has an ability to withstand the impulse current, the switching module is directly turned off without considering the current change trend of the switching module in response to the first current being less than or equal to the second preset current.

In this embodiment of the present disclosure, detailed implementations in the embodiment described in FIG. 2 are described below. It should be noted that the implementations provided in the following descriptions are merely illustrative, and do not represent all implementations of the embodiments of the present disclosure.

In an embodiment, after the inverter circuit is subjected to the pulse blocking, if it is determined that the current of the switching module is in the descending trend, the switching module is turned off within a preset duration starting from a time instant when the acquired current of the switching module is less than or equal to the preset value.

The process of determining the current change trend of the switching module as the descending trend includes continuously acquiring multiple currents of the switching module, and determining the current change trend of the switching module as the descending trend in response to the multiple currents of the switching module being in the descending trend.

The time interval for acquiring the current may be constant, or may change. For example, the time interval is determined based on a frequency or a cycle of phase power of the inverter circuit, for example, the frequency of the phase power is 50Hz, the cycle of phase power is 0.02S, and the time interval may be one twentieth of the cycle, that is, 0.001S, so that the current change trend can be determined by multiple times of acquisitions.

The above process of determining that the current of the switching module is in the descending trend, turning off the switching module within the preset duration starting from a time instant when the acquired current of the switching module is less than or equal to the preset value is implemented in the following manners.

In an embodiment, the first delay duration from the time instant when the turn-off signal is sent to the switching module to the time instant when the switching module is actually turned off is very short and is ignored, the preset value is 0, and the preset duration is a first duration for which the current of the switching module is zero.

Referring to FIG. 3, the first duration for which the current of the switching module is zero is a time interval from T1 and T4 in FIG. 3.

In an embodiment, the first delay duration is considered, the preset value is a current corresponding to a first time instant. The first time instant is a periodic time instant determined by subtracting the first delay duration from a time instant when the current in the periodic current curve corresponding to the switching module decreases to zero. The first delay duration includes a duration from the time instant when the turn-off signal is sent to the switching module to the time instant when the switching module is actually turned off. The preset duration is the first duration for which the current of the switching module is zero.

In an embodiment, the first delay duration and a power-resistant duration are considered. The preset value is a current corresponding to a second time instant. The second time instant is a periodic time instant determined by subtracting a second delay duration from the time instant when the current in the periodic current curve corresponding to the first switching module decreases to zero. The second delay duration includes a duration from the time instant when the turn-off signal is sent to the switching module to the time instant when the switching module is actually turned off, and the power-resistant duration from a time instant corresponding to a maximum impulse current withstood by the switching module to the time instant when the current in the descending portion of the periodic current curve decreases to zero. The preset duration is a sum of the first duration for which the current of the switching module is zero and two times of the power-resistant duration.

The maximum impulse current of the switching module is determined based on the maximum impulse current of the relay switch in the switching module. If the switching module includes multiple relay switches, the maximum impulse current of the switching module is determined based on a minimum current of the maximum impulse currents of the multiple relay switches in the switching module.

Considering that the switching module has a power-resistant ability, the preset duration of the switching module is further increased, a current range within which the controller turns off the switching module is further increased, so that the relay is turned off within a long time range, better adapting the time consumed in the turn-off process. Meanwhile, the time range of turn-off control by the controller can be expanded, reducing a situation that the controller is not turned off until a next cycle, that is, reducing a situation that the switches withstand a large impulse current again during a process of waiting for the next cycle.

The first duration is calculated by the following equation:

$$T = \frac{\pi + \frac{\pi}{6}}{2\pi} * \frac{1}{f} + \Delta T$$

where, $\Delta T$ represents a first time length from a time instant when the current of the switching module decreases to zero to a nearest time instant when the voltage of the switching module is zero on condition that the current descending trend of the switching module is the descending trend,

$$\Delta T = \frac{2\pi - \arcsin\left(\frac{V}{\sqrt{2}U}\right)}{2\pi} * \frac{1}{f}, \quad \frac{3\pi}{2} < \arcsin\left(\frac{V}{\sqrt{2}U}\right) < 2\pi$$

, U represents a rated voltage of the phase power corresponding to the switching module, V represents a voltage of the phase power corresponding to the switching module, and f represents a frequency of the phase power corresponding to the switching module.

In another embodiment, after the inverter circuit is subjected to the pulse blocking, upon determining that the current of the switching module is in the descending trend, the switching module is turned off within the preset duration starting from a time instant when the acquired current of the switching module is less than or equal to the preset value. Further, based on the periodic current curve and the periodic voltage curve shown in FIG. 3, the preset value and the preset duration are determined based on a voltage corresponding to each current. Upon determining that the current change trend of the switching module is the descending trend (or a voltage change trend of the switching module is the rising trend), the switching module is turned off within the preset duration starting from a time instant when the acquired current of the switching module is less than or equal to the preset value in the following manners.

In an embodiment, the first delay duration from the time instant when the turn-off signal is sent to the switching module to the time instant when the switching module is actually turned off is very short and is ignored, the preset value is a voltage corresponding to the time instant when the current of the switching module decreases to zero, the preset duration is a sum of the first time length and a quarter of the cycle of the phase power corresponding to the switching module, and the first time length is a time length from a time instant when the current of the switching module decreases to zero to a nearest time instant when the voltage of the switching module is zero (referring to the time length from T1 to T2 in FIG. 3).

In an embodiment, the first delay duration is considered, the preset value is the voltage corresponding to a time instant obtained by subtracting the first delay duration from the time instant when the current of the first switching module decreases to zero. The first delay duration includes a duration from the time instant when the turn-off signal is sent to the switching module to the time instant when the switching module is actually turned off, and the preset duration is a sum of the first time length and a quarter of the cycle of the phase power corresponding to the switching module.

In an embodiment, the first delay duration and the power-resistant duration are considered, and the preset value is a voltage corresponding to a time instant obtained by subtracting a second delay duration from the time instant when the current of the first switching module decreases to zero. The second delay duration includes a duration from a time instant when the turn-off signal is sent to the switching module to a time instant when the switching module is actually turned off, and the power-resistant duration from a time instant corresponding to the maximum impulse current withstood by the switching module to the time instant when the current in the descending portion of the periodic current curve decreases to zero. The preset duration is a sum of the first time length, the quarter of the cycle of phase power corresponding to the switching module and two times of the power-resistant duration.

In the above embodiments, the switching module includes at least two relay switches, and a control terminal of each of the relay switches is connected to the controller.

The process of turning off the switching module includes turning off one relay switch in the switching module, or turning off multiple relay switches in the switching module.

Multiple redundant switches are arranged on the switching module, so that the switches can alternately operate, prolonging the service life of each switch.

Some implementations of the inverter according to embodiments of the present disclosure are described as above. Based on this, a method for turning off an inverter is provided in the present disclosure. The method according to the embodiments of the present disclosure are described hereinafter.

Reference is made to FIG. 4, which is a schematic flowchart of a method for turning off an inverter. In the method for turning off an inverter, the inverter includes an inverter circuit, at least one switching module and a controller. An input end of the inverter circuit is configured to connect a DC source, an output end of each phase of the inverter circuit is connected to a corresponding switching module of the at least one switching module, and an output end of the at least one switching module is configured to connect a power grid. The method further includes the following steps S401 and S402.

In step S401, pulse blocking is performed on the inverter circuit in response to a short circuit of a negative electrode of the DC source to ground, where the pulse blocking includes disabling a drive pulse for each switching transistor in the inverter circuit.

In step S402, it is determined whether a first current of the switching module at a current time instant is less than or equal to a first preset current after the inverter circuit is subjected to the pulse blocking, where the first preset current is greater than or equal to a safe current of the switching module; a current change trend of the switching module at the current time instant is determined in response to the first current of the switching module being less than or equal to the first preset current; and the switching module is turned off in response to the current change trend being a descending trend;

In an embodiment, upon determining the current change trend of the switching module as the descending trend after the inverter circuit is subjected to the pulse blocking, the switching module is turned off within a preset duration starting from a time instant when the acquired current of the switching module is less than or equal to a preset value.

Based on the above method, it is monitored and analyzed whether the switching module can be safely turned off in combination with the current change trend of the switching module and by comparing the current of the switching module with the first preset current or with the preset value, and the relay is turned off within a long time range based on the current analysis, better adapting the time consumed in the turn-off process. In addition, the preset duration expands a time range of turn-off control by the controller, reducing the situation that the controller is not turned off until a next cycle, that is, reducing the situation that the switches withstand a large impulse current again during a process of waiting for the next cycle.

In an embodiment, the current change trend of the switching module is determined as the descending trend by continuously acquiring multiple currents of the switching module; and determining the current change trend of the switching module as the descending trend in response to the multiple currents of the switching module in the descending trend.

In an embodiment, the preset value is zero, and the preset duration is a first duration for which the current of the switching module is zero.

Alternatively, the preset value is a current corresponding to a first time instant. The first time instant is a periodic time instant determined by subtracting a first delay duration from a time instant when the current in a periodic current curve corresponding to the switching module value decreases to zero. The first delay duration includes a duration from the time instant when a turn-off signal is sent to the switching module to a time instant when the switching module is actually turned off. The preset duration is the first duration for which the current of the switching module is zero.

Alternatively, the preset value is a current corresponding to a second time instant. The second time instant is a periodic time instant determined by subtracting a second delay duration from a time instant when the current in the periodic current curve corresponding to the switching module decreases to zero. The second delay duration includes a duration from a time instant when a turn-off signal is sent to the switching module to a time instant when the switching module is actually turned off, and a power-resistant duration from a time instant corresponding to a maximum impulse current withstood by the switching module to the time instant when the current in the descending portion of the periodic current curve decreases to zero. The preset duration is a sum of the first duration for which the current of the switching module is zero and two times of the power-resistant duration.

The first duration is calculated by the following equation:

$$T = \frac{\pi + \frac{\pi}{6}}{2\pi} * \frac{1}{f} + \triangle T$$

where, $\triangle T$ represents a first time length from a time instant when the current of the switching module decreases to zero to a nearest time instant when the voltage of the switching module is zero on condition that the current descending trend of the switching module is the descending trend,

$$\triangle T = \frac{2\pi - \arcsin\left(\frac{V}{\sqrt{2}U}\right)}{2\pi} * \frac{1}{f} , \quad \frac{3\pi}{2} < \arcsin\left(\frac{V}{\sqrt{2}U}\right) < 2\pi$$

, U represents a rated voltage of the phase power corresponding to the switching module, V represents a voltage of the phase power corresponding to the switching module, and f represents a frequency of the phase power corresponding to the switching module.

In an embodiment, the process of determining a current change trend of the switching module at the current time instant includes: determining the current change trend of the switching module at the current time instant based on a current of the switching module acquired before the current time instant; and/or acquiring a second current of the switching module if a specified duration expires; and determining the current change trend of the switching module based on a relationship between the first current and the second current.

In an embodiment, after the determining whether the first current of the switching module at the current time instant is less than or equal to the first preset current, the method further includes: monitoring a current of the switching module in response to the first current of the switching module being greater than the first preset current; and turning off the switching module upon monitoring that the current of the switching module decrease to be less than or equal to the first preset current.

In an embodiment, the safe current is greater than zero, and after determining that the current of the switching module is less than or equal to the first preset current, the method further includes: determining whether the first current is less than or equal to a second preset current, where the second preset current is less than the safe current; and turning off the switching module in response to the first current being less than or equal to the second preset current.

In an embodiment, the switching module includes at least two relay switches, and a control terminal of each of the relay switches is connected to the controller.

The process of turning off the switching module includes turning off one relay switch in the switching module.

In addition, a photovoltaic system is provided in the present disclosure. The photovoltaic system includes a photovoltaic string and an inverter, where the photovoltaic string is connected to an input end of the inverter, and is configured to supply DC power to the inverter. An output end of the inverter is configured to connect a power grid, and convert DC power into alternating-current (AC) power and transmit the AC power to the power grid, where the inverter is at least one of the inverter according to any one of the embodiments described above or the inverter to which the method for turning off an inverter is applied described above.

A corresponding device and a computer storage medium are further provided in embodiments of the present disclosure, for implementing the solutions according to the embodiments of the present disclosure.

The device includes a memory and a processor, the memory is configured to store an instruction or code, and the processor is configured to execute the instruction or code, so that the device performs the method for turning off the inverter according to any embodiment of the present disclosure.

The computer storage medium stores codes. The codes cause, when being executed by a device, the device to perform the method for turning off the inverter according to any embodiment of the present disclosure.

The expressions "first", "second" (if any) described in the embodiments of the present disclosure are used only for distinguish different names, rather than indicating the first or the second in a sequence.

From the above embodiments, those skilled in the art can clearly appreciate that all or a part of steps in the method according to the above embodiments may be implemented by means of software and a general hardware platform. Based on such understanding, technical solutions of the present disclosure may be embodied as a software product. The computer software product may be stored in a storage medium, such as a read-only memory (ROM)/RAM, a magnetic disc, or an optical disk, and the computer software product includes multiple instructions for enabling a computer device (which may be a personal computer, a server, or a network communication device such as a router) to perform the methods described in various embodiments or some parts of the embodiments of the present disclosure.

The embodiments are described in this specification in a progressive manner. Various embodiments may refer to each other for the same or similar parts, and each embodiment places emphasis on a difference from other embodiments. Especially, for the apparatus embodiments, since they are similar with the method embodiments, the description of the apparatuses is simple, and reference may be made to the relevant part of the method embodiments. Some or all of the modules may be selected as needed to achieve the purpose of the solution of the embodiments. Those skilled in the art can understand and implement the solution without any creative effort.

The foregoing descriptions are only exemplary embodiments of the present disclosure, and are not intended to limit the protection scope of the present disclosure

**Claims**

1. An inverter, comprising:

   an inverter circuit;
   at least one switching module; and
   a controller, wherein
   an input end of the inverter circuit is configured to connect a direct-current, DC, source, an output end of each phase of the inverter circuit is connected to a corresponding switching module of the at least one switching module, and an output end of the at least one switching module is configured to connect a power grid;
   the controller is configured to:

   perform pulse blocking on the inverter circuit in response to a short circuit of a negative electrode of the DC source to ground, wherein the pulse blocking comprises disabling a drive pulse for each switching transistor in the inverter circuit;
   determine whether a first current of a switching module of the at least one switching module at a current time instant is less than or equal to a first preset current after the inverter circuit is subjected to the pulse blocking, wherein the first preset current is greater than or equal to a safe current of the switching module; determine a current change trend of the switching module at the current time instant in response to the first current of the switching module being less than or equal to the first preset current; and
   turn off the switching module in response to the current change trend being a descending trend; or
   turn off the switching module within a preset duration starting from a time instant when an acquired current of the switching module is less than or equal to a preset value, upon determining the current change trend of the switching module as the descending trend after the inverter circuit is subjected to the pulse blocking.

2. The inverter according to claim 1, wherein for determining the current change trend of the switching module as the descending trend, the controller is configured to:

continuously acquire a plurality of currents of the switching module; and
determine the current change trend of the switching module as the descending trend in response to the plurality of currents of the switching module in the descending trend.

3. The inverter according to claim 1, wherein

the preset value is zero, and the preset duration is a first duration for which a current of the switching module is zero;
the preset value is a current corresponding to a first time instant, the first time instant is a periodic time instant determined by subtracting a first delay duration from a time instant when a current in a periodic current curve corresponding to the switching module decreases to zero, and the first delay duration comprises a duration from a time instant when a turn-off signal is sent to the switching module to a time instant when the switching module is actually turned off, wherein the preset duration is a first duration for which a current of the switching module is zero; or
the preset value is a current corresponding to a second time instant, the second time instant is a periodic time instant determined by subtracting a second delay duration from a time instant when a current in a periodic current curve corresponding to the switching module decreases to zero, and the second delay duration comprises a duration from a time instant when a turn-off signal is sent to the switching module to a time instant when the switching module is actually turned off, and a power-resistant duration from a time instant corresponding to a maximum impulse current withstood by the switching module to a time instant when the current in a descending portion of the periodic current curve decreases to zero; and the preset duration is a sum of a first duration for which a current of the switching module is zero and two times of the power-resistant duration.

4. The inverter according to claim 3, wherein

the first duration is calculated by the following equation:

$$T = \frac{\pi + \frac{\pi}{6}}{2\pi} * \frac{1}{f} + \Delta T$$

wherein, $\Delta T$ represents a first time length from a time instant when the current of the switching module decreases to zero to a nearest time instant when a voltage of the switching module is zero on condition that the current descending trend of the switching module is the descending trend,

$$\Delta T = \frac{2\pi - \arcsin\left(\frac{V}{\sqrt{2}U}\right)}{2\pi} * \frac{1}{f} , \quad \frac{3\pi}{2} < \arcsin\left(\frac{V}{\sqrt{2}U}\right) < 2\pi$$

, U represents a rated voltage of phase power corresponding to the switching module, V represents a voltage of the phase power corresponding to the switching module, and f represents a frequency of the phase power corresponding to the switching module.

5. The inverter according to claim 1, wherein for the determining the current change trend of the switching module at the current time instant, the controller is configured to:

determine the current change trend of the switching module at the current time instant based on a current of the switching module acquired before the current time instant; and/or
acquire a second current of the switching module if a specified duration expires; and determine the current change trend of the switching module based on a relationship between the first current and the second current.

6. The inverter according to claim 1, wherein after determining whether a first current of a switching module of the at least one switching module at a current time instant is less than or equal to a first preset current, the inverter is further configured to:

monitor the current of the switching module in response to the first current of the switching module being greater than the first preset current; and

turn off the switching module upon monitoring that the current of the switching module decreases to be less than or equal to the first preset current.

7. The inverter according to claim 1, wherein the safe current is greater than zero, and after determining whether a first current of a switching module of the at least one switching module at a current time instant is less than or equal to a first preset current, the inverter is further configured to:

determine whether the first current is less than or equal to a second preset current, wherein the second preset current is less than the safe current; and

turn off the switching module in response to the first current being less than or equal to the second preset current.

8. The inverter according to claim 1, wherein

for each of the at least one switching module,

the switching module comprises at least two relay switches, and a control terminal of each of the at least two relay switches is connected to the controller, wherein for the turning off the switching module, the controller is configured to:

turn off one of the at least two relay switches in the switching module.

9. A method for turning off an inverter, wherein the inverter comprises: an inverter circuit, at least one switching module and a controller; an input end of the inverter circuit is configured to connect a direct-current, DC, source, an output end of each phase of the inverter circuit is connected to a corresponding switching module of the at least one switching module, and an output end of the at least one switching module is configured to connect a power grid; and the method comprises:

performing pulse blocking on the inverter circuit in response to a short circuit of a negative electrode of the DC source to ground, wherein the pulse blocking comprises disabling a drive pulse for each switching transistor in the inverter circuit;

determining whether a first current of a switching module of the at least one switching module at a current time instant is less than or equal to a first preset current after the inverter circuit is subjected to the pulse blocking, wherein the first preset current is greater than or equal to a safe current of the switching module; determining a current change trend of the switching module at the current time instant in response to the first current of the switching module being less than or equal to the first preset current; and

turning off the switching module in response to the current change trend being a descending trend; or

turning off the switching module within a preset duration starting from a time instant when an acquired current of the switching module is less than or equal to a preset value, upon determining the current change trend of the switching module as the descending trend after the inverter circuit is subjected to the pulse blocking.

10. A photovoltaic system, comprising:

a photovoltaic string; and

an inverter, wherein

the photovoltaic string is connected to an input end of the inverter, and is configured to supply direct-current, DC, power to the inverter;

an output end of the inverter is configured to connect a power grid, convert DC power into alternating-current, AC, power and transmit the AC power to the power grid, and

the inverter is at least one of the inverter according to any one of claims 1 to 8 or the inverter to which the method according to claim 9 is applied.

FIG. 1

Controller

K1 K2 K3 K4 K5 K6

A B C

iA — Module A

ib — Module B

ic — Module C

**FIG. 2**

**FIG. 3**

| Perform pulse blocking on the inverter circuit in response to a short circuit of a negative electrode of the DC source to ground, where the pulse blocking includes disabling a drive pulse for each switching transistor in the inverter circuit | S401 |
|---|---|

| Determine whether a first current of the switching module at a current time instant is less than or equal to a first preset current after the inverter circuit is subjected to the pulse blocking, where the first preset current is greater than or equal to a safe current of the switching module; determine a current change trend of the switching module at the current time instant if the first current of the switching module is less than or equal to the first preset current; and turn off the switching module if the current is in a descending trend; or, turn off the switching module within a preset duration starting from a time instant when the acquired current of the switching module is less than or equal to a preset value, upon determining that the current of the switching module is in the descending trend after the inverter circuit is subjected to the pulse blocking | S402 |

**FIG. 4**

Europäisches
Patentamt

European
Patent Office

Office européen
des brevets

## EUROPEAN SEARCH REPORT

**Application Number**

EP 24 22 1791

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 199 293 A1 (HUAWEI DIGITAL POWER TECH CO LTD [CN]) 21 June 2023 (2023-06-21) | 1-3,5-10 | INV.<br>H02M1/32 |
| A | * abstract *<br>* paragraph [0001] - paragraph [0175]; figures 1-18 * | 4 | H02M1/36<br>H02M7/487 |
| A | US 2008/123234 A1 (KOYAMA HARUHIKO [JP] ET AL) 29 May 2008 (2008-05-29)<br>* abstract *<br>* paragraph [0001] - paragraph [0047]; figures 1-3E * | 1-10 | |

- - - - -

- - - - -

**TECHNICAL FIELDS
SEARCHED       (IPC)**

H02M

The present search report has been drawn up for all claims

| Place of search | Date of completion of the search | Examiner |
|---|---|---|
| The Hague | 26 May 2025 | Adami, Salah-Eddine |

EPO FORM 1503 03.82 (P04C01)

## ANNEX TO THE EUROPEAN SEARCH REPORT
## ON EUROPEAN PATENT APPLICATION NO.

EP 24 22 1791

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | Publication date | Patent family member(s) | Publication date |
|---|---|---|---|
| EP 4199293 A1 | 21-06-2023 | AU 2021336496 A1<br>CN 112234645 A<br>EP 4199293 A1<br>US 2023208312 A1<br>WO 2022048345 A1 | 13-04-2023<br>15-01-2021<br>21-06-2023<br>29-06-2023<br>10-03-2022 |
| US 2008123234 A1 | 29-05-2008 | CA 2609039 A1<br>CN 101192483 A<br>DE 102007054860 A1<br>JP 4825648 B2<br>JP 2008136290 A<br>US 2008123234 A1 | 28-05-2008<br>04-06-2008<br>26-06-2008<br>30-11-2011<br>12-06-2008<br>29-05-2008 |

EPO FORM P0459

For more details about this annex : see Official Journal of the European Patent Office, No. 12/82